# EUROPEAN PATENT APPLICATION

(11) **EP 1 548 098 A1**
(43) Date of publication of application: **29.06.2005**
(21) Application number: 04257297.4
(22) Date of filing: 24.11.2004
(51) Int. Cl.: C12H 1/04, C12L 11/00

(54) **Wine preservation system**

(30) Priority: 24.12.2003 US 746929 P
(71) Applicant: Chen, Jonathan, Oakland, California 94611-1742 (US); Willcox, Winifred O-Herron, Oakland, California 94611-1742 (US)
(72) Inventor: Chen, Jonathan, Oakland, California 94611-1742 (US); Willcox, Winifred O-Herron, Oakland, California 94611-1742 (US)
(74) Representative: Haines, Miles John

(57) **Abstract**

Wine within an opened bottle is preserved by introducing an inert gas through a seal which seals the previously opened bottle. An adapter seals the bottle and the inert gas is injected into the bottle through the seal from a removable gas supply. The gas supply attaches to the adapter in an airtight manner while the adapter seals the wine bottle in an airtight manner. The gas supply can be removed from the adapter and used with other adapters to preserve other bottles of wine while each adapter seals the inert gas within a respective bottle of wine until consumption of the wine in a particular bottle is to resume.

## Description

### FIELD OF THE INVENTION

This invention relates to the field of wine preservation systems, and more specifically to a particularly efficient mechanism for delivering pressurized inert gas into a bottle of wine and isolating the inert gas therein.

### BACKGROUND

For the wine lover, it is a weighty decision whether to open a bottle of valuable wine when it's unclear that the bottle will be entirely consumed in one sitting. For a proprietor of an establishment serving wine, more expensive wines are served only by the bottle and not by the glass as spoiling wine can represent a significant loss. As is generally understood, wine spoils. In other words, wine reacts with surrounding air to develop an unpleasant taste.

A number of wine preservation systems have been developed over the years to delay this spoilage for a few days to allow an opened bottle of wine to hold its flavor and to stretch enjoyment of an opened bottle of wine. One such system is a vacuum pump incorporated with, or attachable to, a rubber "cork" with a one-way air valve. As used herein, a cork is an object used to seal a wine bottle -- regardless of whether the object is actually made from traditional cork material, namely, the bark of a cork oak tree. In such a vacuum system, the user corks the bottle of wine and pumps out as much air as possible, hopefully leaving virtually no air in the bottle. Typically, 30 or more hand actuations of the pump are required to attain minimum air pressure within a bottle. 30 hand actuations of the pump represents substantial effort by a person hoping to preserve their wine and is unacceptable effort in the hospitality industry, e.g., a restaurant or hotel hoping to preserve wines sold by the glass. Even after 30 or more actuations of the pump, small amounts of air remain in the bottle and react with the wine. The time by which spoilage of the wine is postponed in a bottle preserved with a hand-actuated vacuum pump is generally unsatisfactory.

Another mechanism which attempts to postpone wine spoilage uses a aerosol-style can to deliver pressurized gas into an opened wine bottle. The pressurized gas is typically a mixture of gases believed to be inert with respect to wine. Once the gas mixture is sprayed into the opened wine bottle, the wine bottle is re-corked to seal the inert gas mixture within.

One of the gases in the mixture is argon gas. Argon gas is a noble gas and is therefore truly inert. However, argon gas generally can't be kept in large quantities at the maximum pressure typically containable by a aerosol-style spray can. In addition, the delivery mechanism is sloppy and gases can overflow the opened wine bottle and escape into the atmosphere. Accordingly, argon is typically a very small percentage of the gas mixture in such cans -- both to keep the pressure within the spray can below an acceptable maximum and to reduce the expense of the gas sprayed into the wine bottle. A more prevalent gas in such spray can systems is carbon-dioxide which generally does not react with the wine in a way which affects the wine's flavor. However, the carbon-dioxide is eventually absorbed by the wine such that the wine becomes lightly carbonated after a day or two. The resulting fizziness of the wine is distinctly unpleasant to wine connoisseurs.

In addition, the amount of gas introduced into the opened wine bottle varies wildly. When sprayed, the gas mixture enters the bottle at a high velocity and can exit the open bottle during spraying. Normal air which is present inside the bottle during spraying mixes with the sprayed gas mixture and much of this normal air remains in the bottle after spraying. As a result, the nature of the gas which remains in the bottle after spraying is nearly impossible to know with any certainty. Accordingly, after spraying, the amount of gas in the bottle which is not reactive with wine may be only a small percentage. Generally, the amount by which spoilage of wine is postponed using such a spray-can system is unsatisfactory.

The premier wine preservation system today are wine dispensing cabinets. Opened wine bottles are kept in a cabinet and are sealed with an inlet for non-reactive gas and an outlet for wine. The non-reactive gas is pressurized within the opened and sealed wine bottles such that wine is pressed out the outlet by the gas pressure. Opening a simple liquid dispenser valve allows the wine to flow into a glass.

The primary disadvantages of wine dispensing cabinets are expense and limited capacity. Such cabinets are plumbed to preserve and dispense a limited number of bottles of wine at any given time. For example, WBTG Systems, Inc. of Los Angeles, California currently offers wine dispensing cabinets ranging in capacity from eight (8) to thirty-two (32) bottles for prices ranging from over $4,000 to nearly $9,000, respectively. The smaller dispensing cabinet takes up more than five (5) square feet of counter space for only eight (8) bottles of wine. The price and space requirements of such a system are out of reach for most individual consumers. The space considerations alone are unacceptable throughout the hospitality industry in which the number of wines served by the bottle makes dispensing cabinets for such wines infeasible given storage space which is typically available.

There's another, more subtle, disadvantage to wine dispensing cabinets. Wine drinking is an activity steeped in tradition and custom. Wine should be served from an open bottle tilted over a glass. The plastic dispensing valve of some wine dispensing cabinets in which a lever is pushed while a glass is held beneath to dispense the wine detracts significantly from the overall wine experience.

What is needed is a mechanism by which wines can be effectively preserved for extended periods of time at a reasonable expense and using minimum space.

### SUMMARY OF THE INVENTION

In accordance with the present invention, an adapter seals an opened wine bottle and an inert gas is injected into the bottle through the seal from a removable gas supply. The gas supply attaches to the adapter in an airtight manner while the adapter seals the wine bottle in an airtight manner. A valve of the adapter opens to allow gas to pass through a conduit through the adapter while isolated from the atmosphere generally outside the bottle. As a result, the inert gas can be delivered more reliably into the bottle than with the conventional spray can method. The gas does not overflow from the bottle. Thus, pure argon gas can be used with confidence that excess gas is not being wasted. To provide a useful supply of argon gas in a portable supply, the removable gas supply includes a cartridge of argon gas at very high pressure, e.g., about 2,611 psi or about 180 atmospheres.

The gas supply is removable from the adapter. Accordingly, the gas supply can be used with multiple adapters, each sealing a respective wine bottle. Each adapter can fit within the lateral bounds of a wine bottle, thereby occupying no more counter-top or shelf space than an ordinary bottle of wine. This provides a particularly convenient and cost-effective solution for effective wine preservation.

In use, the user inserts the adapter into the opened wine bottle and seals the adapter to the wine bottle such that an airtight seal exists between the wine bottle and the adapter. The user then attaches an outlet of the removable gas supply to an inlet of the adapter. The removable gas supply includes a regulator which presents the inert gas at about two (2) atmospheres (e.g., 32 psi), reduced from the 2,611 psi pressure within the cartridge. However, the regulator is initially closed when not attached to an adapter.

The outlet of the removable gas supply forms an airtight joint with the inlet. The user then ensures that a valve in the adapter between the inlet and the interior of the wine bottle is open. If the valve is closed, the user opens it to open a path between the removable gas supply and the interior of the wine bottle. Of course, an automatic valve can be used such that attachment of the removable gas supply to the inlet automatically opens the valve without user intervention.

With the valve open, the user opens the regulator of the removable gas supply. Such allows inert gas at about 32 psi to fill into the wine bottle. A release valve allows gas to escape from the sealed wine bottle at a pressure slightly below 32 psi. Since argon gas is considerably heavier than normal air, the incoming argon gas settles to the surface of the wine in the bottle and the normal air previously present in the bottle rises and grows in pressure until it escapes through the release valve. After a few seconds, the wine bottle is filled with nothing other than wine and argon gas at a pressure of slightly below 32 psi.

Alternatively, the release valve is set to open at a pressure slightly higher than the pressure at which argon gas is introduced into the bottle. Since the air within the wine bottle prior to filling is at about 14 psi (about one atmosphere), the argon mixes with the air until an equilibrium pressure of about 32 psi is attained. The amount of argon gas in the air/argon mixture is predictable and quantifiable and is substantially higher than one finds in a spray can style gas preservation system for wine.

After a second or two has elapsed, all normal air has been expelled from the bottle through the release valve, or alternatively, the air/argon mixture has reached equilibrium. The user closes the regulator to isolate the argon gas in the cartridge from the inlet. The user closes the valve of the adapter to isolate the argon-air mixture from the inlet of the adapter. The removable gas supply can then be removed from the inlet of the adapter and the argon-air mixture remains sealed within the wine bottle. It should be noted that an automatic valve can also be used to automatically close when the removable gas supply is removed from the inlet. Thus, user intervention is not required to close the valve. Similarly, the regulator can be automatically closed by a spring mechanism to return the valve to the closed position when released by the user or can be configured to release a predetermined fixed amount of argon gas in response to a single push-button actuation by the user.

With the adapter sealing the argon gas within the wine bottle and the removable gas supply removed from the adapter, the wine bottle can be stored in a preserved state in a footprint no larger than that of the wine bottle itself. In addition, the removable gas supply is free to be used to preserve other bottles of wine.

To serve the preserved wine, the user opens the valve to release any pressure within the wine which exceeds that of the surrounding atmosphere. The user loosens the seal between the adapter and the wine bottle and removes the adapter from the wine bottle. If the adapter uses an automatic valve, the user simply loosens the seal between the adapter and the wine bottle to allow the excess pressure to escape and then loosens the seal further and removes the adapter from the wine bottle. Alternatively, the release valve can be opened by the user to release any gas at a pressure above atmospheric pressure prior to removing the adapter. In any case, the result is that the wine bottle is open with the adapter removed and appearing as if the wine bottle had just been opened. And, generally, the wine tastes the same way -- as if the wine bottle had recently been opened for the first time. The presence of an opened bottle of wine and the experience of pouring the wine directly from the bottle into a wine glass preserves the experience of drinking wine as much as the wine itself.

### BRIEF DESCRIPTION OF THE DRAWINGS

Figure 1 is a perspective view of an adapter and gas supply assembly attached to an opened wine bottle in accordance with the present invention.
Figure 2 is a perspective view of the adapter of Figure 1 in isolation.
Figure 3 is a cross-section view of the adapter of Figures 1-2.
Figure 4 is a cross-section view of an alternative adapter in accordance with the present invention.
Figure 5 is a view of a regulator assembly, a compressed gas cartridge, and a cartridge cover of the gas supply assembly of Figure 1.
Figures 6, 7, and 8 are top, front, and side views, respectively, of a wine preservation system in accordance with an alternative embodiment of the present invention.

### DETAILED DESCRIPTION

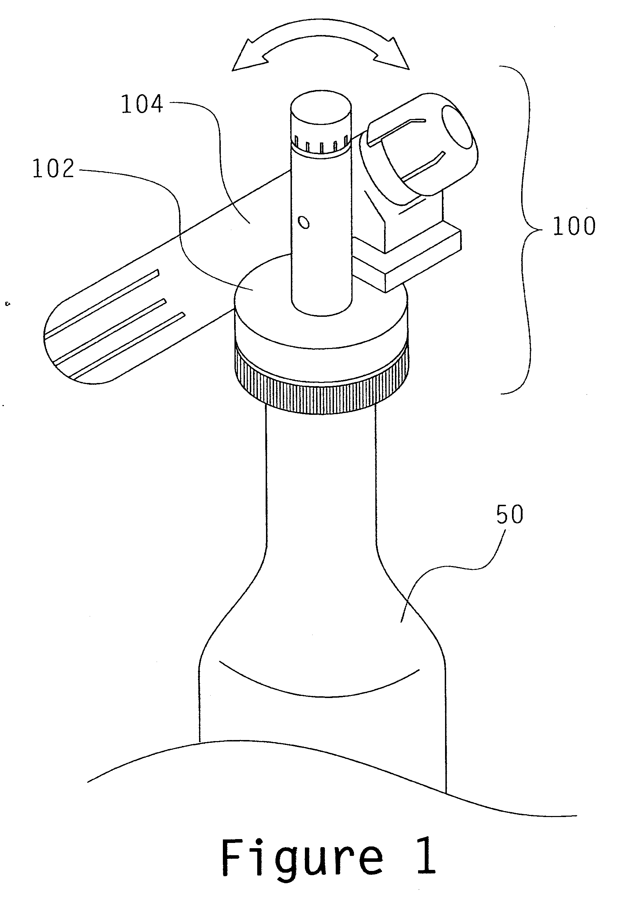

In accordance with the present invention, a wine preservation assembly 100 (Figure 1) includes a sealing adapter 102 and a gas supply assembly 104. Specifically, sealing adapter 102 provides a sealed conduit through which an inert gas is introduced into a wine bottle 50 from gas supply assembly 104. Gas supply assembly 104 can thereafter be removed from sealing adapter 102 while sealing adapter 102 maintains the seal with wine bottle 50 to seal the inert gas therein.

Operation of wine preservation assembly 100 is described more completely below but is briefly described here to facilitate appreciation and understanding of the components described below and to facilitate appreciation of the advantages achieved by wine preservation assembly 100. Initially, sealing adapter 102 and gas supply assembly 104 are separate and wine bottle 50 is open and partially filled with wine. A user attaches sealing adapter 102 to wine bottle 50 such that wine bottle 50 is sealed by sealing adapter 102. The user then attaches gas supply assembly 104 to sealing adapter 102 so as to form an airtight seal therebetween.

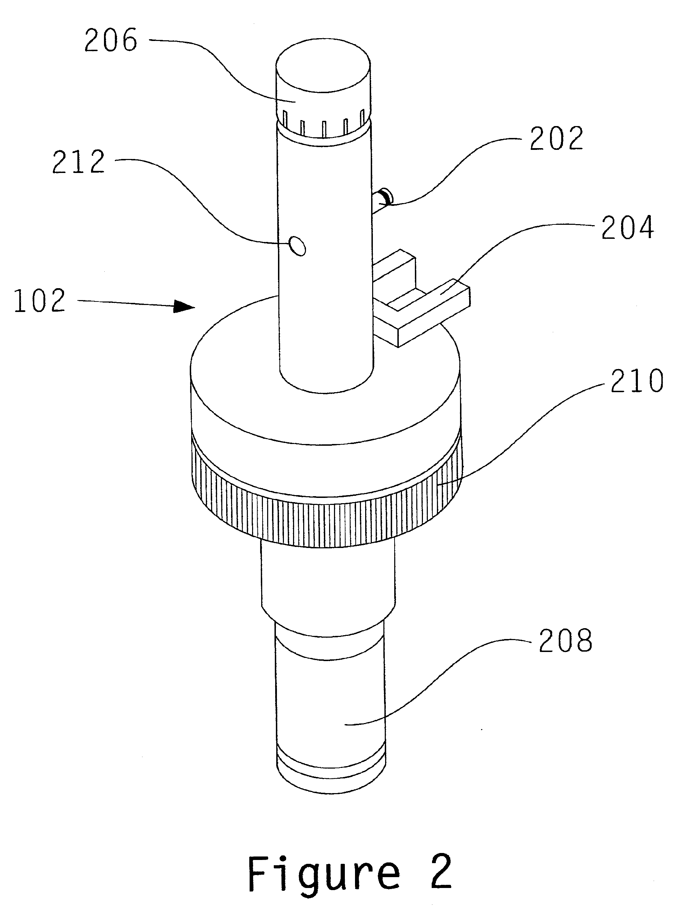

With sealing adapter 102 sealed between wine bottle 50 and gas supply assembly 104, the use opens both a regulator within gas supply assembly 104 and a valve within sealing adapter 102 such that the inert gas is allowed to flow from gas supply assembly 104 through sealing adapter 102 into wine bottle 50. The relative order in which the valve and the regulator are opened is unimportant. In this illustrative embodiment, the regulator of gas supply assembly 104 is set to allow inert gas to flow out at a pressure of about two (2) atmospheres (e.g., 32 pounds per square inch -- psi). A release valve 212 (Figure 2) allows air to escape at a pressure slightly below the pressure at which the inert gas is introduced through sealing adapter 102. Since argon gas is considerably heavier than ordinary air, the argon gas settles at the surface of the wine and ordinary air rises and escapes through release valve 212. Thus, wine preservation using wine preservation assembly 100 is at least as effective as are wine dispensing cabinets but in a form (i) which is much less expensive, (ii) which is much smaller, thereby saving storage costs, and (iii) which preserves the wine experience of pouring wine into a glass directly from a bottle.

Next, the user closes both the regulator of gas supply assembly 104 and the valve of sealing adapter 102. The relative order in which the valve and the regulator are closed is unimportant. With these closed, the user detaches gas supply assembly 104 from sealing adapter 102 such that wine bottle 50 remains filled with argon gas and sealed by only sealing adapter 102. It can be seen in Figure 1 that, while sealing adapter 102 extends beyond the top of wine bottle 50 to some degree, sealing adapter 102 does not extend beyond the footprint of wine bottle 50. Accordingly, storage of wine bottle 50 in its preserved and sealed state requires virtually no more space than to store wine bottle 50 alone. Conversely, wine dispensing cabinets can require more than a square foot of shelf or counter space to store only two preserved bottles of wine. In addition, the cost of preserving wine is greatly reduced as sealing adapter can be manufactured relatively inexpensively and a number of bottles of wine can each have a respective individual sealing adapter and share gas supply assembly 104. However, it should be appreciated that having gas supply assembly 104 and sealing adapter 102 integrated into a single device provides many of the benefits described herein and still represents a significant improvement over existing wine preservation systems. Such an embodiment would obviate a separate valve within sealing adapter 102 to isolate gas sealed within wine bottle 50 from gas supply assembly 104.

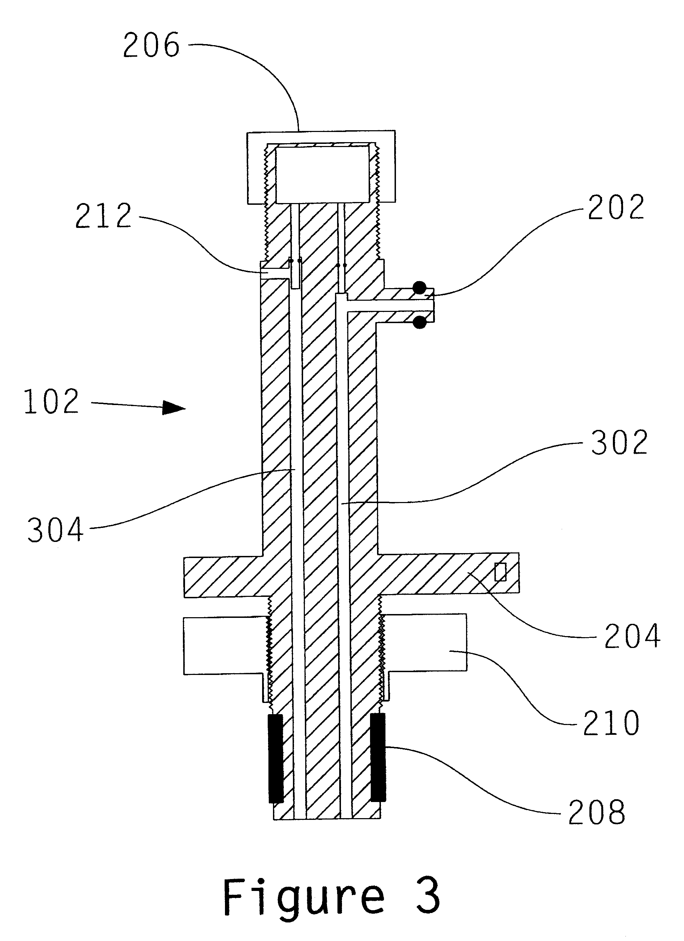

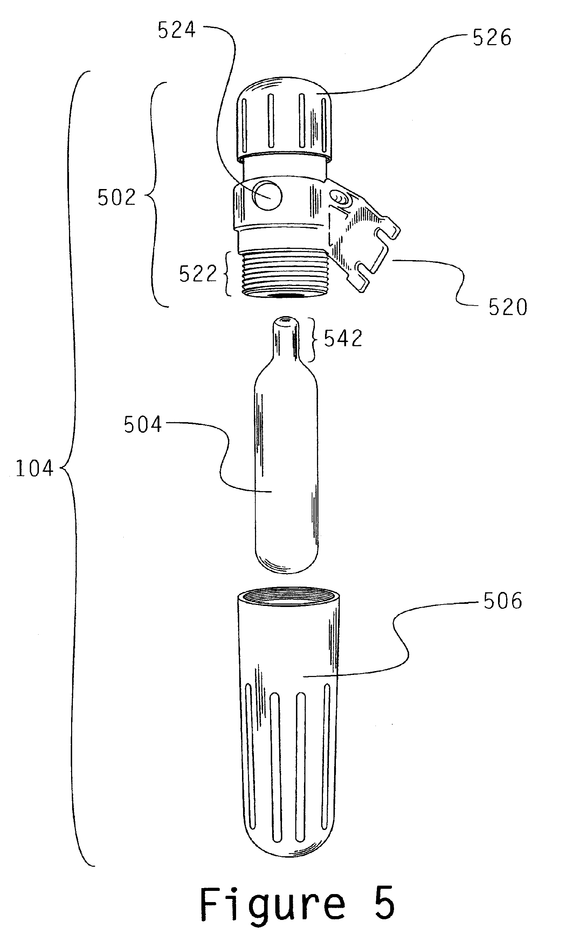

Sealing adapter 102 is shown independently of gas supply assembly 104 and wine bottle 50 in Figure 2. In addition, sealing adapter 102 is shown in cross-section view in Figure 3. Sealing adapter 102 includes an inlet 202 and a mounting bracket 204. When a mounting clip 520 (Figure 5) of gas supply assembly 104 is slid onto mounting bracket 204 (Figure 2) completely and clipped into place, inlet 202 mates with an outlet 524 (Figure 5) of gas supply assembly 104 to form an airtight seal therebetween. Sealing adapter 102 (Figure 2) also includes a twist cap valve 206, silicone rubber packing 208, an adapter dial 210, and a release valve 212.

In operation, the user inserts silicone rubber packing 208 (Figure 3) into an opened bottle of wine and twists adapter dial 210 to compress silicone rubber packing 208 such that silicone rubber packing 208 expands laterally to form a seal with the interior of the neck of wine bottle 50. Of course, many other mechanisms can be used to form an airtight seal between sealing adapter 102 and wine bottle 50.

With sealing adapter 102 sealed into wine bottle 50, twist cap valve 206 selectively opens and closes a passage 302 between the interior of wine bottle 50 and inlet 202. The user ensures that twist cap valve 206 is closed to thereby block passage 302. In a manner described below, the user couples outlet 524 (Figure 5) to inlet 202 (Figure 3) and allows inert gas to flow into inlet 202. The user opens twist cap valve 206 to allow the inert gas to flow through passage 302 into wine bottle 50. In this illustrative embodiment, gas supply assembly 104 is configured to dispense inert gas at a pressure of about 32 psi, i.e., slightly more than two (2) atmospheres. Release valve 212 is configured to release gas at a pressure slightly less than 32 psi, e.g., 30 psi. As a result, heavier argon gas settles to the surface of the wine and ordinary rises above the argon gas and exits through release valve 212 until only wine and argon gas remain inside wine bottle 50.

Alternatively, release valve 212 is set to release gas at a pressure slightly greater than 32 psi as a safety measure and does not release gas during normal operation. In this alternative embodiment, inert gas flows through passage 302 until a pressure of about 32 psi is attained within wine bottle 50. At equilibrium, i.e., when the pressure inside wine bottle 50 equals the pressure of inert gas dispensed by gas supply assembly 104, the gases within wine bottle 50 now include reliable and quantifiable amount insert gas, which is argon gas in this illustrative embodiment. This amount is considerably greater than one typically sees inside a bottle of preserved wine using the conventional spray bottle wine preservers. If gas supply assembly 104 somehow malfunctions and dispenses inert gas at a pressure appreciably above 32 psi, excess gas travels through a passage 304 and out release valve which is configured to release gas at pressures appreciably above 32 psi. Thus, any danger of over pressurizing wine bottle 50 is avoided.

After just a few seconds from the time twist cap 206 is opened, all ordinary air has been expelled from wine bottle 50 through release valve 212 or, in the alternative embodiment, pressure within wine bottle 50 reaches equilibrium at about 32 psi. The user closes twist cap valve 206 to seal the inert gas within wine bottle 50. Thereafter, gas supply assembly 104 can be closed and removed from sealing adapter 102. The inert gas remains sealed within wine bottle 50 and gas supply assembly 104 is free to be used to preserve another bottle of wine with another instance of sealing adapter 102.

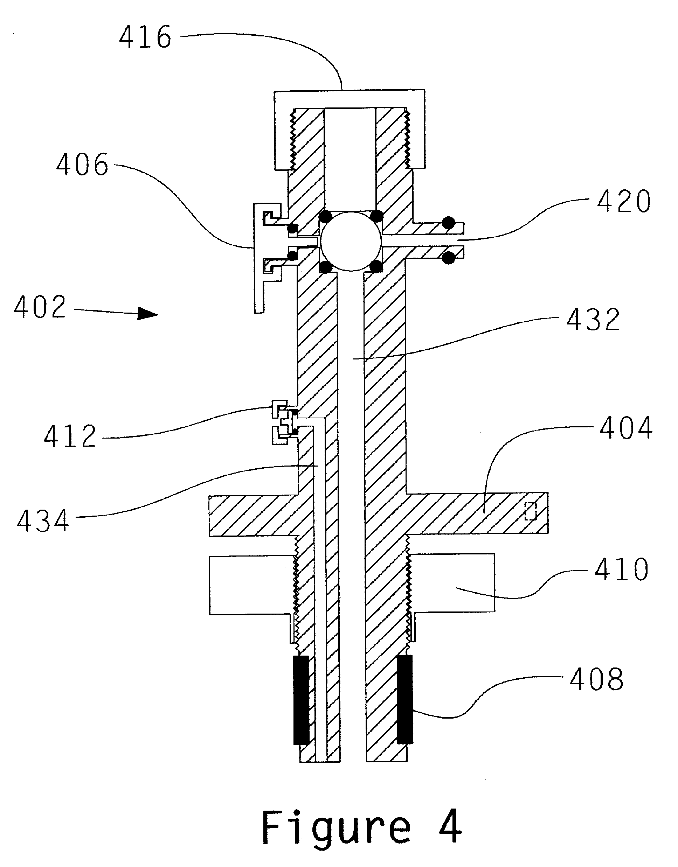

An alternative embodiment of sealing adapter 102 is shown in cross-section view as sealing adapter 402 in Figure 4. Sealing adapter 402 includes an inlet 420, a mounting bracket 404, silicone rubber packing 408, adapter dial 410, release valve 412, and passages 432 and 434 which are respectively analogous to inlet 202 (Figure 3), mounting bracket 204, silicone rubber packing 208, adapter dial 210, release valve 212, and passages 302 and 304 of sealing adapter 102 as described above. However, instead of twist cap valve 206, sealing adapter 402 (Figure 4) includes a cap 416 and a separate twist valve 406.

Many other configurations by which gas supply assembly 104 (Figures 2 and 2) can be coupled to the interior of wine bottle 50 through an open airway through a sealing adapter. For example, twist cap valve 206 can be replaced with a push-button cap valve. Alternatively, a spring-loaded valve can automatically open such an airway when outlet 524 (Figure 5) is coupled to the spring-loaded valve and can automatically close the airway when outlet 524 is decoupled. Such push-button and spring-loaded valves are well known.

Gas supply assembly 104 is shown in greater detail in Figure 5 and includes a regulator assembly 502, a compressed inert gas cartridge 504, and a cartridge cover 506. Compressed inert gas cartridge 504 is a standard form factor compressed gas cartridge filled with an inert gas. Herein, an inert gas means a gas which is not chemically reactive with the liquid to be preserved. In this illustrative embodiment, the liquid to be preserved is wine. Thus, an inert gas, as used in the context of this illustrative embodiment, is a gas which is not chemically reactive with wine. As described above, argon gas is the inert gas used in this embodiment. Compressed inert gas cartridge 504 is a 21 milliliter (ml) steel bottle. To provide a useful life in the rather small form factor, compressed gas cartridge 504 is filled with argon gas at a pressure of about 180 bar (i.e., about 178 atmospheres or 2,611 psi). This provides generally about 20-30 uses of gas supply assembly 104 before compressed inert gas cartridge 504 is completely depleted and must be replaced for further use of gas supply assembly 104.

Compressed gas cartridge 504 includes a threaded end 542 which screws into a matching thread inside regulator assembly 502. When the user screws compressed gas cartridge 504 into regulator assembly 502, regulator assembly 502 punctures compressed gas cartridge 504 inside threaded end 542 in a conventional manner to open an airway between compressed gas cartridge 504 and regulator assembly 502.

Regulator assembly 502 includes a regulator of generally conventional design which reduces the 2,611-psi pressure of the inert gas compressed within compressed gas cartridge 504 to the target pressure of about 32 psi at outlet 524. The resulting pressure at outlet 524 is controlled by a regulator head 526. The user can twist regulator head 526 to control the resulting pressure at outlet 524 from 32 psi down to zero such that the user can close the inert gas within regulator assembly 502 completely. In an alternative embodiment, regular head 526 is spring-loaded to return to a closed position when released by the user. In another embodiment, regular head 536 is replaced with a push-button actuator by which the user can cause regulator assembly 502 to release a predetermined fixed about of inert gas, e.g., enough to fill 75% of a 750ml wine bottle at 32 psi on the assumption that at least one glass of wine will remain in any bottle of preserved wine. Of course, other fixed amounts can be used.

Cartridge cover 506 screws onto threads 522 of regulator assembly 502 to enclose compressed gas cartridge 504 primarily for aesthetic reasons and to provide a degree of added safety in protecting compressed gas cartridge 504 from shock should gas supply assembly 104 be accidentally dropped.

In operation, the user screws compressed gas cartridge 504 into regulator assembly 502. If the regulator is open, inert gas will exit through outlet 524 at a fairly safe pressure of 32 psi. The user simply closes the regulator by twisting regulator head 526 so that no gas is observed to escape from outlet 524. The user screws cartridge cover 506 onto threads 522 over compressed gas cartridge 504. Gas supply assembly 104 is then complete and ready for use in preserving wines.

Specifically, with sealing adapter 102 (Figure 2) securely sealed within wine bottle 50 in the manner described above, the user slides mounting clip 520 (Figure 5) onto mounting bracket 204 (Figure 2) until plastic spring clips or, alternatively, some other retaining mechanism engages to hold outlet 524 (Figure 5) securely coupled with inlet 202 (Figure 2) in an airtight manner. The user then twists regulator head 526 (Figure 5) to open the regulator and present inert gas at a pressure of about two (2) atmospheres to inlet 202 (Figure 2).

In the manner described above, the user opens twist cap valve 206, pauses briefly, and closes twist cap valve 206 to allow an amount of inert gas to flow into wine bottle 50. Once twist cap valve 206 has been re-closed, the user twists regulator head 526 (Figure 5) to close the regulator of regulator assembly 502. The inert gas within compressed gas cartridge 504 is then isolated from sealing adapter 102 (Figure 2). The user removes gas supply assembly 104 by releasing the plastic spring clips of mounting clip 520 (Figure 5) and slides mounting clip 520 off of mounting bracket 204.

In this illustrative embodiment, gas supply assembly is adapted from a gas supply assembly used in the Beer Party 2 beer serving system available from Pacific Century CybcrWorks Limited (PCCW, Ltd.) of Tokyo, Japan. In particular, the gas supply assembly is modified to regulate compressed gas from about 2,611 psi down to about 32 psi as described above.

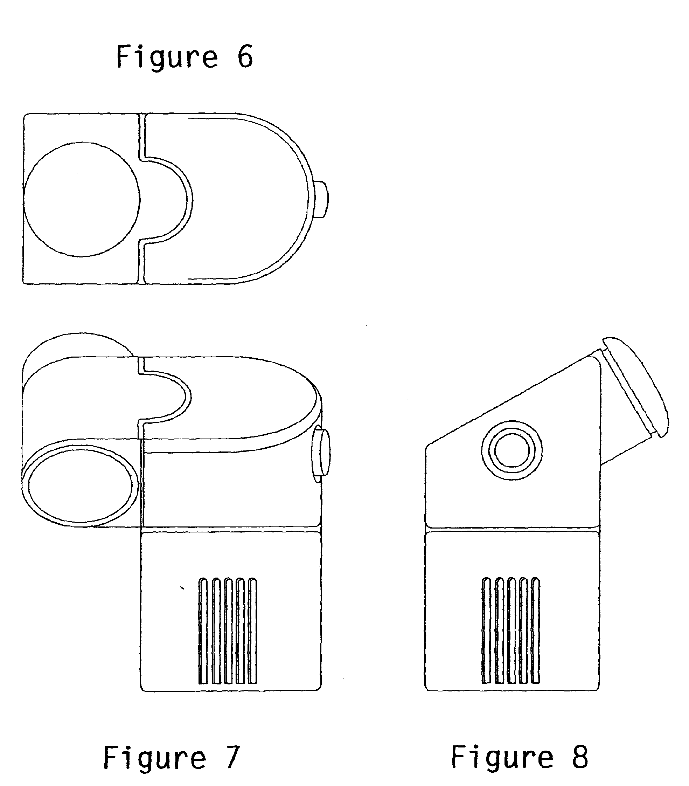

Figures 6, 7, and 8 are top, front, and side views, respectively, of an alternative embodiment of a wine preservation assembly in accordance with the present invention. The distinctions over embodiments described above are primarily aesthetic. Functionality and operation are as described above.

The above description is illustrative only and is not limiting. For example, while a pressure of 32 psi is described as a preferred pressure at which to introduce inert gas into the wine bottle, other pressures can be used. The pressure should be sufficient to expel ordinary air at atmospheric pressure from the bottle and not so great as to harm the wine. In particular, excess pressure can serve as a catalyst in reactions in wine to affect flavor. Currently, pressures in the range of 25-32 psi provide good results. Accordingly, the present invention is defined solely by the claims which follow and their full range of equivalents.

## Claims

1. A method for preserving a beverage stored in an opened container, the method comprising:
forming a seal of the container to seal the beverage therein;
attaching a source of gas to a passage through the seal;
opening the passage to introduce the gas through the seal into the container such that the gas serves to preserve the beverage within the container; and
thereafter closing the passage to seal the gas within the container and to seal the gas from the source of gas.

2. The method of Claim 1 wherein the gas preserves the beverage by both being non-reactive with the beverage and displacing other gases near the surface of the beverage.

3. The method of Claim 2 wherein the gas is argon gas.

4. The method of Claim 1 wherein the beverage is wine.

5. The method of Claim 1 wherein the source of gas includes a container of compressed gas and a regulator which delivers the gas from the container at a target pressure.

6. The method of Claim 5 wherein the target pressure is 32 psi.

7. The method of Claim 1 wherein attaching comprises coupling the source of gas to an inlet which is attached to the passage.

8. The method of Claim 7 wherein opening comprises opening a valve between the inlet and the passage.

9. The method of Claim 8 wherein closing comprises closing the valve.

10. The method of Claim 1 further comprising:
after closing the passage, detaching the source of gas from the seal, leaving the container sealed with the gas therein.

11. The method of Claim 1 further comprising:
breaking the seal of the container;
dispensing the beverage from the container; and
repeating the forming, the attaching, the opening, and the closing to seal additional gas within the container along with a remainder of the beverage.

12. An adapter for sealing a beverage within an opened container, the adapter comprising:
a seal which forms a sealed coupling with the container with the beverage therein;
an inlet which receives a gas from a gas supply and to which the gas supply can be coupled in an airtight manner;
a valve which is operatively coupled between the seal and the inlet and which selectively allows the gas to pass from the inlet into the container through the seal;
wherein the valve can be closed after allowing the gas to pass from the gas supply through the inlet, valve, and seal into the container to thereby seal the gas within the container.

13. The adapter of Claim 12 wherein the inlet, the valve in an open position, and the seal form a sealed conduit between the gas supply and the container wherein the sealed conduit seals the gas within the gas supply, adapter, and container in isolation from an atmosphere outside the container.

14. The adapter of Claim 12 wherein the gas supply can be detached from the inlet, leaving the gas sealed within the container.

15. The adapter of Claim 12 wherein the gas preserves the beverage by both being non-reactive with the beverage and displacing other gases near the surface of the beverage.

16. The adapter of Claim 15 wherein the gas is argon gas.

17. The adapter of Claim 12 wherein the beverage is wine.

18. The adapter of Claim 12 wherein the source of gas includes a container of compressed gas and a regulator which delivers the gas from the container at a target pressure.

19. The adapter of Claim 18 wherein the target pressure is 32 psi.

20. A method for preserving a beverage stored in an opened container, the method comprising:
forming a seal of the container to seal the beverage therein;
introducing a gas through the seal into the container such that (i) the gas serves to preserve the beverage within the container and (ii) subsequent access to the beverage requires removable of the seal from the container.
